(19) Europäisches Patentamt
European Patent Office
Office européen des brevets

(11) **EP 3 059 972 A1**

(12) **EUROPEAN PATENT APPLICATION**

(43) Date of publication:
24.08.2016 Bulletin 2016/34

(51) Int Cl.:
*H04N 21/431* (2011.01)  *H04N 21/462* (2011.01)
*H04N 21/4722* (2011.01)

(21) Application number: **15305248.5**

(22) Date of filing: **19.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Vandeputte, Frederik
2018 Antwerpen (BE)**

(74) Representative: **ALU Antw Patent Attorneys
Intellectual Property and Standards
Copernicuslaan 50
2018 Antwerp (BE)**

(54) **Methods and devices for transmission of interactive content**

(57)    Embodiments relate to a method for transmission of interactive content from a server (3) to at least one client device (4), executed by the server (3), comprising:
- receiving, from a client device (4), at least one command (CMD), wherein the client device (4) receives a first video stream (V1) including a first video (B),
- determining an interactive video (I) in function of said at least one command (CMD),
- determining spatial blending information ($\alpha$) associated with the interactive video (I) for combining the interactive video (I) with the first video (B),
- determining at least one second video stream (V2) including said interactive video (I) and said spatial blending information ($\alpha$), and
- sending said at least one second video stream (V2) to the client device (4).

FIG. 1

EP 3 059 972 A1

Printed by Jouve, 75001 PARIS (FR)

**Description**

FIELD OF THE INVENTION

The present invention relates to the field of telecommunications. In particular, the present invention relates to methods and devices for transmission of interactive content.

BACKGROUND

It is common to display a combination of a video content and an interactive content. For example, an interactive Electronic Program Guide (EPG) may be displayed in overlay over a video channel. Various techniques have been proposed for displaying such combination of contents.

For example, the rendering may be implemented on a client device. In that case, the interactive applications are limited to the capacities of the client device and cannot be easily upgraded. For example, a client device designed for displaying a 2D interface of an EPG cannot render a 3D interface of an EPG.

In another example, the rendering may be implemented on a server, which transmits a combined video stream to the client device. This provide good flexibility because the capacities of the sever may be upgraded or reconfigured without the need to change the client device. However, a server connected to a plurality of client devices must render and stream respective combined video streams to each client device. This requires, for each client device, dedicated computing power at the server and transmission bandwidth.

The document US2014/0366057 describes a method of overlay rendering of user interface onto a source video. A server determines successive images of a user interface. The source video and the images are transmitted separately to a client device. The client device combines the source video and the successive images by alpha blending. The use cases of a user interface based on static images are limited. Furthermore, the combination of the source video and the images is based on a predetermined alpha-blending, which limits the possibilities.

SUMMARY

It is thus an object of embodiments of the present invention to propose methods and devices for transmission of media content, which do not show the inherent shortcomings of the prior art.

Accordingly, embodiments relate to a method for transmission of interactive content from a server to at least one client device, executed by the server, comprising:

- receiving, from a client device, at least one command, wherein the client device receives a first video stream including a first video,
- determining an interactive video in function of said at least one command,
- determining spatial blending information associated with the interactive video for combining the interactive video with the first video,
- determining at least one second video stream including said interactive video and said spatial blending information, and
- sending said at least one second video stream to the client device.

Correspondingly, embodiments relate to a server for transmission of interactive content to at least one client device, comprising:

- a rendering module configured for:

  - receiving, from a client device, at least one command, wherein the client device receives a first video stream including a first video,
  - determining an interactive video in function of said at least one command, and
  - determining spatial blending information associated with the interactive video for combining the interactive video with the first video, and
- a streaming module configured for:
  - determining at least one second video stream including said interactive video and said spatial blending information, and
  - sending said at least one second video stream to the client device.

In some embodiments, the at least one second video stream comprises one video stream including both of said interactive video and said spatial blending information. In other embodiments, the at least one second video stream comprises one video stream including said interactive video and one other video stream including said spatial blending information.

The interactive video and/or the spatial blending information may have the same resolution as the first video or a lower resolution than the first video. In some embodiments, the interactive video and the spatial blending information are associated with a region of the first video and the at least one second video stream specifies a position of said region.

In some embodiments, the spatial blending information comprises WxH alpha-blending coefficients encoded with n-bits, and determining at least one second video stream comprises mapping the WxH alpha-blending coefficients to n-bits R, G and B values of a WxH/3 image. The method may comprise mapping a 4x3 block of alpha-blending coefficients to a 2x2 block of R values, a 2x2 block of G values, and a 2x2 block of B values.

In some embodiments, the spatial blending information comprises WxH alpha-blending coefficients encoded with n-bits, and determining at least one second video stream comprises mapping the WxH alpha-blending coefficients to a Wx(2xH/3) YUV420 image.

Determining at least one second video stream may comprise determining encoding settings in function of the spatial blending information and encoding the interactive video in function of the encoding settings. Determining at least one second video stream may comprise pre-processing the interactive video in function of the spatial blending information and encoding the pre-processed interactive video.

Other embodiments relate to a method for transmission of interactive content from a server to a client device, executed by the client device, comprising:

- receiving a first video stream including a first video,
- sending, to a remote server, at least one command,
- receiving, from said remote server, at least one second video stream including an interactive video determined in function of said at least one command and spatial blending information for combining the interactive video and the first video,
- determining a combined video by combining the first video and the interactive video in function of the spatial blending information.

The method may comprise displaying the combined video.

Embodiments also relate to a computer program comprising instructions for performing one of the methods mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is block diagram of a system for transmission of interactive content,
Figure 2 is a flowchart of a method for transmission of interactive content, executed by the server of the system of Figure 1,
Figure 3 is a flowchart of a method for transmission of interactive content, executed by the client device of the system of Figure 1,
Figure 4 represents a mapping pattern of alpha-blending coefficient, and
Figure 5 is a structural view of a communication device of the system of Figure 1.

DESCRIPTION OF EMBODIMENTS

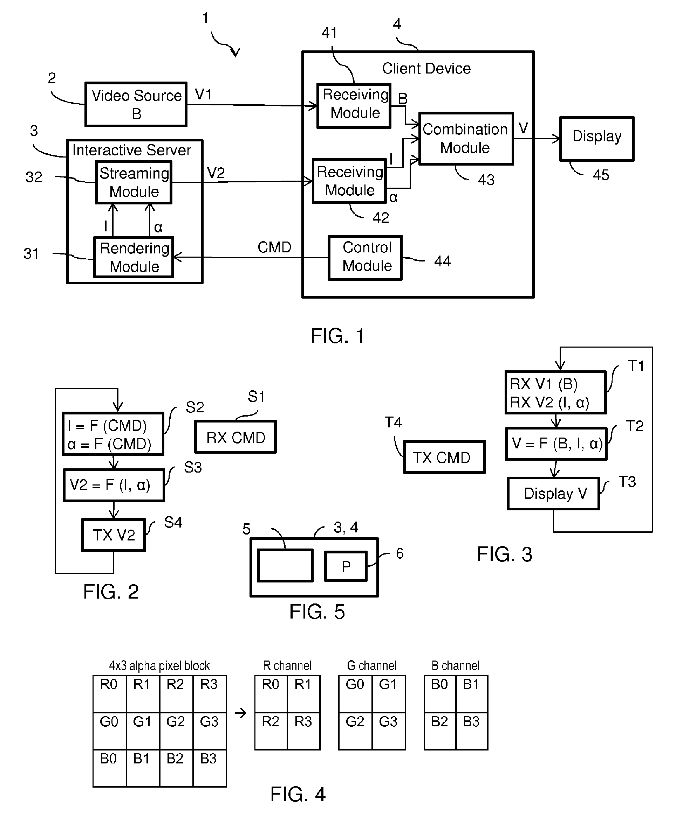

**Figure 1** shows a system 1 for transmission of media contents. The system 1 comprises at least one video source 2, at least one interactive server 3 and at least one client device 4 (only one of each shown for simplicity).

A video source 2 sends a video stream V1 including a background video B to a client device 4. The background video B may correspond to a live or linear TV channel, a video content from a Video-On-Demand service, a broadcast video channel... The video stream V1 may be a broadcast, multicast or unicast video stream. In the case of a broadcast or multicast video stream V1, a plurality of client devices 4 receive the video stream V1.

An interactive server 3 comprises a rendering module 31 and a streaming module 32. Hereafter, functioning of the interactive server 3 in relationship with one client device 4 is described. It should be understood that the same functioning may be executed in parallel for respective client devices 4.

The rendering module 31 receives successive commands CMD from the client device 4, and determines an interactive video I in function of the commands. The interactive video I may represent for example an Electronic Program Guide, a video game or any other interactive application. The rendering module 31 also determines spatial blending information α for combining the background video B and the interactive video I. For example, the spatial blending information α includes alpha blending coefficients for combining the pixels of corresponding frames of the background video B and the interactive video I. The interactive video I determined by the rendering module 31 may change over time between successive commands CMD. For example, the action of a video game continues between successive commands CMD.

The streaming module 32 encodes and sends the interactive video I and the spatial blending information α in at least one video stream. More specifically, in the embodiment shown on Figure 1, the streaming module 32 combines the interactive video I and the spatial blending information α, encodes the resulting combination and streams the encoded combination in a single video stream V2. In another embodiment (not illustrated), the streaming module 32 encodes separately the interactive video I and the spatial blending information α, and sends a video stream V2' including the encoded the interactive video I and another video stream V2" including the spatial blending information α. The streams V2' and V2" may be included in a common container or not. Various techniques for combining and/or encoding the interactive video I and the spatial blending information α may be used by the streaming module 32 and some examples are described hereafter.

A client device 4 comprises receiving modules 41 and 42, a combination module 43 and a control module 44. A display 45 is connected to or included in the client device 4.

The receiving module 41 receives the video stream V1 from the video source 2 and decodes the background video B.

The receiving module 42 receives the video stream V2 (or V2' and V2"), and decodes the interactive video I and the spatial blending information α. This include separating the interactive video I and the spatial blending information α in case they have been combined by the interactive server 3.

The combination module 43 combines the background video B and the interactive video I in a combined video V, in function of the spatial blending information α. For example, for each pixel x, y of a frame of the combined video V:

$$\text{Equation 1}: \quad V(x, y) = I(x, y) * α(x, y) + B(x, y) * (1-α(x, y))$$

wherein:

- V(x, y) denotes the RGB values of the pixel (x, y) of a frame of the combined video V,
- I(x, y) denotes the RGB values of the pixel (x, y) of a frame of the interactive video I,
- α(x, y) denotes the alpha-blending coefficient for the pixel (x, y), comprised in the range from 0 to 1, and
- B(x, y) denotes the RGB values of the pixel (x, y) of a frame of the background video B.

Other blending technique may be used in alternative embodiments.

The control module 44 sends commands CMD to the interactive server 3, for example in function of inputs from a user. In some embodiments, the interactive video I and spatial blending information α are determined, transmitted and displayed for some time periods only. In other time periods, only the background video B is transmitted and displayed. Accordingly, the commands CMD may include for example one command to start the interactive video I, one command to stop the interactive video I and interaction commands such as navigating in a menu, controlling the action in a game...

The display 45 displays the combined video V.

In the system 1, an interactive video I is displayed by the client device 4 (in combination with a background video B). Since the interactive video I is determined by a remote interactive server 3, the interactive applications proposed by the interactive server 3 are not limited by the capacities of the client device 4. Furthermore, the interactive applications may be changed or upgraded without the need to replace or upgrade the client device 4. The transmission of the interactive video I and spatial blending information allows for great flexibility of the interactive applications provided by the interactive server 3.

In some embodiments, a plurality of client devices 4 display the background video B continuously, but each client device 4 displays an interactive video I for some time periods only, which differs from one client device 4 to the other. Accordingly, the interactive server 3 does not need to determine nor send respective interactive videos I and the associated spatial blending information α for all the client devices 4 at the same time. This limits the computing and networking resources required by the interaction server 3.

Moreover, the streaming module 32 may encode the interactive video I and the associated spatial blending information α efficiently, thereby also limiting the required networking resources.

Hereafter, the background video B, the interactive video I and the spatial blending information α may be referred to as the background plane, the overlay plane and the alpha plane, respectively.

In embodiments wherein the streaming module 32 encodes separately the interactive video I and the spatial blending information $\alpha$, and sends a video stream V2' including the encoded the interactive video I and another video stream V2" including the spatial blending information $\alpha$, different encoding schemes or even formats may be used respectively for the streams V2' and V2". This allows selecting an optimized encoding scheme and/or format for each of the streams V2' and V2".

In embodiments wherein the streaming module 32 combines the interactive video I and the spatial blending information $\alpha$, encodes the resulting combination and streams the encoded combination in a single video stream V2, only one decoding buffer is used at the receiving module 42. Also, different settings can still be used for the interactive video I and the spatial blending information $\alpha$. For example, H.264 and other formats support dividing a video stream in multiple slices, which are encoded independently of each other. Combining the interactive video I and the spatial blending information $\alpha$ may comprises for example stitching the spatial blending information $\alpha$ right or below the interactive video I.

In some embodiments, the interactive video I and the spatial blending information $\alpha$ are encoded and streamed at full resolution, that is at the same resolution WbxHb as the background video B. This provides maximal quality and flexibility.

In other embodiments, the interactive video I and/or the spatial blending information $\alpha$ are encoded and streamed at lower resolution than the resolution WbxHb of the background video B, while preserving the aspect ratio. This limits the required bandwidth. Moreover, this does not necessarily result in a loss of quality, in particular for an alpha plane wherein the transparency consists of large rectangular regions. The graphical user interface of the interactive application could be optimized itself to take into account this limitation. Note that in case the scaling factor of the alpha plane differs from the overlay plane and they are stitched together in one single stream, some additional packing may be necessary to end up with one rectangle for encoding. For example, in case the downscaling factor of the alpha plane is twice that of the overlay plane, the downscaled alpha plane could be split in two halves and placed next to each other, both underneath the (scaled) overlay plane (other semi-symmetrical solutions are also possible). For example, if the resolution of the downscaled overlay plane is WxH, and the resolution of the downscaled alpha plane is (W/2)x(H/2), then both planes could be fitted into a plane with dimensions WxH+2x(W/2)x(H/4) = Wx(H+H/4), increasing the vertical resolution by only 25% (which, in case the overlay plane was also scaled, will be likely smaller than the resolution WbxHb of the background video B). In case of a scalable video codec, it may be possible to dynamically add/remove layers of different quality and/or resolution based on the requirements of the overlay and alpha planes.

In other embodiments, the interactive video I and/or the spatial blending information $\alpha$ are encoded and streamed at lower resolution than the resolution WbxHb of the background video B, without preserving the aspect ratio. This is a generalization of the previous case, where one of the resolutions is stretched more than the other resolution. For example, the width could be preserved, but the height may be reduced to 2/3 the original height. This can be interesting for reducing the required bandwidth in case the resolution requirements differ. For example, in case the resolution of the overlay plane is WxH, and both the overlay and alpha planes are stretched vertically by 2/3, then the total stitched resolution is Wx(4*H/3), or only 33% more than the resolution WbxHb instead of twice the resolution. The stretch ratio may be different for the overlay and alpha planes.

In some cases, it may be that the overlay plane only will be active in some region of the video screen. Although the overlay and alpha plane in that case would be largely "empty" and encode very well, it still requires unnecessarily large encode/decode buffers (note that the encoding could be optimized not to try to encode each frame completely knowing that some regions of the planes are not used). To avoid this, and still have high-resolution overlays on only a portion of the screen, in some embodiments, only the relevant region of the overlay is taken into account, encoded and streamed. This then requires an additional offset to be sent along the stream to indicate where the overlay region needs to be blended with the background video at the decoder side. In case this offset is not static, regular updates need to be provided (possibly every frame). To avoid complexities at the decoder side, the size of the region remains preferably constant as long as the video stream V2 remains active.

For each encoding resolution option described previously, the receiving module 42 of the client device 4 decodes the interactive video I and the spatial blending information $\alpha$ from the received video stream V2 (or V2' and V2"), and adapts the resolution thereof to match the resolution WbxHb of the background video B.

In Equation 1, $\alpha(x, y)$ denotes the alpha-blending coefficient for the pixel (x, y), comprised in the range from 0 to 1. Typically, this value may be represented by a byte having a value comprised in the range from 0 to 255. Then, the alpha plane is encoded as a video stream.

In some embodiments, this comprises converting the alpha plane to a grayscale image, where the R, G and B pixel channel planes are identical and represent the value of $\alpha(x, y)$. As video codecs typically work in YUV420 format, this means that for the alpha plane, only the Y channel is used, and the U and V channels will be unused (they will be the constant 128, which compresses very nicely though).

In other embodiments, the $\alpha(x, y)$ values of the alpha plane with resolution WxH are mapped to R, G, B values of a WxH/3 image. For example, if the streaming module 32 stripes the different rows/columns of the alpha planes across the R, G and B channels, this can reduce the horizontal or vertical resolution of the resulting RGB-striped alpha channel by 3: For example, the streaming module 32 converts a WxH 8-bit image into a WxH/3 24-bit image, which, after YUV420 conversion, is reduced to a WxH/3 12-bit image, meaning a resolution reduction of 50%. There are many different ways onto which the alpha values can be mapped onto the R, G, B values. Unfortunately, due to the later conversion towards YUV420, it is not possible to come up with a mapping pattern that results in no quality loss in the general case with random alpha channels. However, as we will illustrate, for alpha planes with particular properties, it is possible to come up with specific mappings that result in no quality loss. Keep in mind that in YUV420, the color information is downsampled, meaning that per 2x2 RGB block, the color of each pixel in each 2x2 block should be as similar as possible, as the color information will be averaged across all 4 pixels. In general, the mapping pattern could either be a static/standardized (set of) pattern(s), or could be optimized specifically for the application. The decoder at the end device simply needs to know what pattern was used for packing the alpha channel into the RGB planes. Some simple mapping patterns include the following:

- First, one could map subsequent rows or columns of the alpha plane (A) to the subsequent R, G, B rows or columns. For example, A0 could be mapped onto R0, A1 onto G0, A2 onto B0, A3 onto R1, etc.
- A second mapping is to map the rows of columns of the alpha plane per pair onto the subsequent R, G, B channels. For example, A0 → R0, A1 →R1, A2→G0, A3→G1, A4→B0, A5→B1, A6→R2, A7→R3, etc. As it turns out, this pattern in general gives slightly better results than the pattern above. The reason for this is the YUV420 color downsampling per 2x2 block as described above: by doing the mapping/striping per two-rows, neighboring alpha pixels are mapped more onto neighboring R,G,B pixels (per 2x2 pixel block). In case the original alpha plane does not have a too high amount of detail or the detail aligns well with the 2x2 blocks, then the quality loss is reduced. Of course, in such case, one may consider also downscaling the alpha channel.
- A third mapping is to map 4x3 pixel blocks onto 2x2 R, G, B pixel blocks. This configuration reduces the resolution from WxH to (W/2)x(2*H/3). However, when splitting this into two pieces and stitching them next to each other, the resulting resolution then becomes Wx(H/3). In case the overlay plane would be downsampled by 2/3, then the final resulting stitched version would be of size WxH. (Note that one could also use 3x4 patterns and stitch the resulting RGB alpha plane horizontally next to the overlay plane.) An example mapping is illustrated in **Figure 4.** With the mapping pattern of Figure 4, in case the alpha values horizontally remain constant per 4 subsequent pixels, or vertically per 3 pixels, then no significant quality is lost due to YUV420 conversion. In the former case, the R,G,B colors will be similar per 2x2 pixels; whereas in the latter case, the 2x2 block of pixels is actually gray (Ri=Gi=Bi), which can be converted at full resolution (Y channel has full resolution, U and V would be constants, i.e., 128, hence no loss in quality after conversion).

In other embodiments, instead of mapping the 8-bit alpha plane into RGB and doing the YUV420 conversion afterwards (suffering from lossy conversion issues), another option is to do the striping directly in the YUV420 plane (and do the possible stitching with the overlay plane in the YUV420 plane rather than in the RGB plane). As mentioned above, YUV420 is a 12-bit format, meaning that e.g. a WxH alpha plane can reduced to a Wx(2xH/3) resolution: for every 3x2 alpha 8-bit pixels, we can map these onto a 2x2 Y block with the remaining two alpha pixels in the U and V pixel that goes along that Y-block. The way these pixels are mapped can be optimized to optimize quality.

In some embodiments, encoding the interactive video I comprises determining encoding settings in function of the spatial blending information α and/or pre-processing the interactive video I in function of the spatial blending information α.

Indeed, due to the alpha plane, not all pixels in the overall plane are equally important and thus not need to be encoded with equal quality. For example, for all pixels that are completely transparent, it really does not matter what the pixel content is in the overlay plane. As a result, one can treat these pixels as 'don't care' while the encoding is estimating the quality of some encoding. Even more so, it could consider altering/smoothening the pixels so that they can be encoded more easily with fewer bits, especially in case of highly contrast edges in both overlay and alpha plane (e.g., text). For pixels that are semi-transparent, something in between could be used: depending on the transparency level, the accuracy of the luminance and/or color information of the transparent overlay region may differ, which can be taken into account while encoding.

As mentioned, the image could be preprocessed based on these alpha values so optimize the resulting encoder. The advantage of such approach would be that existing encoders could be used and still gain benefits. Even in case of an alpha-aware encoder, having a preprocessing pass may be beneficial, trading off optimality with complexity of the encoder.

At a coarse-grain encoder optimization level, different slices could be encoded with different quality settings. More fine-grained, different 16x16 macroblocks, 8x8, 8x4, 4x8, or 4x4 blocks could dynamically be encoded with different quality settings, depending on the (average) alpha values in the corresponding block in the alpha plane.

Note that being able to efficiently encode the alpha overlay stream is crucial to have maximal benefits of the overlay streaming method, especially in case there may be long periods in which the overall stream is active. Note that in the latter case, the server could actually also send a signal to the decoder as metadata in the stream to temporarily turn off the overlay mode and switch to the overlay stream only, in which case the system temporarily switches to a thin-client mode of streaming. In case one of the resolution-reduction mechanisms was used, one could even consider a mode where the decoder is requested to switch to a thin-client version of the stream using fast-channel-change.

**Figure 2** is a flowchart of a method for transmission of interactive content, executed by the interactive server 3.

The interactive server 3 receives commands CMD from the client device 4 (step S1).

The interactive server 3 also determines an interactive video I and associated spatial blending information $\alpha$ (step S2). The interactive video I and associated spatial blending information $\alpha$ are determined in function of the commands CMD and may change over time between successive commands CMD. The interactive server 3 determines a video stream V2 (or two video stream V2' and V2") including the interactive video I and associated spatial blending information $\alpha$ (step S3). Then, the interactive server 3 sends the video stream V2 (or two video stream V2' and V2") to the client device 4 (step S4). This process is executed continuously, for example until the reception of a command to stop determination and transmission of the interactive video I.

**Figure 3** is a flowchart of a method for transmission of interactive content, executed by the client device 4.

The client device 4 receives, from the video source 2, the video stream V1 including the background video B and, from the interaction server 3, the video stream V2 (or two video stream V2' and V2") including the interactive video I and associated spatial blending information $\alpha$ (step T1). The client device 4 determines the combined video V by combining the background video B with the interactive video I in function of the spatial blending information $\alpha$ (step T2) and displays the combined video V (step T3).

Also, the client device 4 sends commands CMD to the interactive server 3 (step T4).

**Figure 5** is a structural view of a communication device, which may be the server 3 or the client device 4. The communication device comprises a processor 5 and a memory 6. The memory 6 stores a computer program P which, when executed by the processor 5, cause the communication device to execute one of the methods described above with reference to Figures 2 and 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for transmission of interactive content from a server (3) to at least one client device (4), executed by the server (3), comprising:

   - receiving (S1), from a client device (4), at least one command (CMD), wherein the client device (4) receives a first video stream (V1) including a first video (B),
   - determining (S2) an interactive video (I) in function of said at least one command (CMD),
   - determining (S2) spatial blending information ($\alpha$) associated with the interactive video (I) for combining the interactive video (I) with the first video (B),
   - determining (S3) at least one second video stream (V2) including said interactive video (I) and said spatial

blending information ($\alpha$), and
- sending (S4) said at least one second video stream (V2) to the client device (4).

2. Method according to claim 1, wherein said at least one second video stream comprises one video stream including both of said interactive video and said spatial blending information.

3. Method according to claim 1, wherein the at least one second video stream comprises one video stream including said interactive video and one other video stream including said spatial blending information.

4. Method according to one of claims 1 to 3, wherein the interactive video and/or the spatial blending information have the same resolution as the first video.

5. Method according to one of claims 1 to 3, wherein the interactive video and/or the spatial blending information have a lower resolution than the first video.

6. Method according to claim 5, wherein the interactive video and the spatial blending information are associated with a region of the first video and the at least one second video stream specifies a position of said region.

7. Method according to one of claims 1 to 6, wherein the spatial blending information comprises WxH alpha-blending coefficients encoded with n-bits, and determining at least one second video stream comprises mapping the WxH alpha-blending coefficients to n-bits R, G and B values of a WxH/3 image.

8. Method according to claim 7, comprising mapping a 4x3 block of alpha-blending coefficients to a 2x2 block of R values, a 2x2 block of G values, and a 2x2 block of B values.

9. Method according to one of claims 1 to 6, wherein the spatial blending information comprises WxH alpha-blending coefficients encoded with n-bits, and determining (S3) at least one second video stream comprises mapping the WxH alpha-blending coefficients to a Wx(2xH/3) YUV420 image.

10. Method according to one of claims 1 to 9, wherein determining (S3) at least one second video stream comprises determining encoding settings in function of the spatial blending information and encoding the interactive video in function of the encoding settings.

11. Method according to one of claims 1 to 10, wherein determining (S3) at least one second video stream comprises pre-processing the interactive video in function of the spatial blending information and encoding the pre-processed interactive video.

12. Computer program (P) comprising instructions for performing the method of one of claims 1 to 11 when said instructions are executed by a computer.

13. Server (3) for transmission of interactive content to at least one client device (4), comprising:

   - a rendering module (31) configured for:

      - receiving, from a client device, at least one command, wherein the client device receives a first video stream including a first video,
      - determining an interactive video in function of said at least one command, and
      - determining spatial blending information associated with the interactive video for combining the interactive video with the first video, and

   - a streaming module (32) configured for:

      - determining at least one second video stream including said interactive video and said spatial blending information, and
      - sending said at least one second video stream to the client device.

14. Method for transmission of interactive content from a server (3) to a client device (4), executed by the client device, comprising:

- receiving (T1) a first video stream (V1) including a first video (B),
- sending (T4), to a remote server (3), at least one command (CMD),
- receiving (T1), from said remote server, at least one second video stream (V2) including an interactive video (I) determined in function of said at least one command and spatial blending information ($\alpha$) for combining the interactive video (I) and the first video (B),
- determining (T2) a combined video (V) by combining the first video (B) and the interactive video (I) in function of the spatial blending information ($\alpha$).

**15.** Method according to claims 14, comprising displaying (T3) the combined video.

1

2
Video Source
B
V1

41
4
Client Device
Receiving
Module
B

3
Interactive Server
32
Streaming
Module
V2
Receiving
Module
I
Combination
Module
V
Display

31
Rendering
Module
I α
42
α
43
45

CMD
Control
Module
44

FIG. 1

S2
S1
I = F (CMD)
α = F (CMD)
RX CMD

S3
V2 = F (I, α)

S4
TX V2

FIG. 2

T4
TX CMD

T1
RX V1 (B)
RX V2 (I, α)

T2
V = F (B, I, α)

T3
Display V

FIG. 3

5
3, 4
P
6

FIG. 5

| 4x3 alpha pixel block | | | |
|---|---|---|---|
| R0 | R1 | R2 | R3 |
| G0 | G1 | G2 | G3 |
| B0 | B1 | B2 | B3 |

→

| R channel | |
|---|---|
| R0 | R1 |
| R2 | R3 |

| G channel | |
|---|---|
| G0 | G1 |
| G2 | G3 |

| B channel | |
|---|---|
| B0 | B1 |
| B2 | B3 |

FIG. 4

Europäisches
Patentamt

European
Patent Office

Office européen
des brevets

## EUROPEAN SEARCH REPORT

Application Number

EP 15 30 5248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 170 942 A1 (MATSUSHITA ELECTRIC IND CO LTD [JP]) 9 January 2002 (2002-01-09) * paragraph [0051] - paragraph [0064] * ----- | 1-15 | INV. H04N21/431 H04N21/462 H04N21/4722 |
| Y | US 2006/164437 A1 (KUNO SHINJI [JP]) 27 July 2006 (2006-07-27) * paragraph [0013] - paragraph [0015] * * paragraph [0078] * ----- | 1-15 | |
| A | WO 2009/110897 A1 (HEWLETT PACKARD DEVELOPMENT CO [US]; TSAI LEONARD [US]; THATCHER ALEXA) 11 September 2009 (2009-09-11) * paragraph [0026] - paragraph [0027]; figure 3 * * paragraph [0030] - paragraph [0037] * ----- | 1-15 | |

TECHNICAL FIELDS
SEARCHED (IPC)

H04N

The present search report has been drawn up for all claims

| Place of search | Date of completion of the search | Examiner |
|---|---|---|
| Munich | 23 April 2015 | Schoeyer, Marnix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 3 059 972 A1

## ANNEX TO THE EUROPEAN SEARCH REPORT
## ON EUROPEAN PATENT APPLICATION NO.

EP 15 30 5248

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2015

| Patent document cited in search report | | Publication date | Patent family member(s) | | Publication date |
|---|---|---|---|---|---|
| EP 1170942 | A1 | 09-01-2002 | AU | 2710201 A | 31-07-2001 |
| | | | CN | 1365571 A | 21-08-2002 |
| | | | EP | 1170942 A1 | 09-01-2002 |
| | | | US | 2002171765 A1 | 21-11-2002 |
| | | | WO | 0154400 A1 | 26-07-2001 |
| US 2006164437 | A1 | 27-07-2006 | JP | 4568120 B2 | 27-10-2010 |
| | | | JP | 2006191240 A | 20-07-2006 |
| | | | US | 2006164437 A1 | 27-07-2006 |
| WO 2009110897 | A1 | 11-09-2009 | CN | 102067586 A | 18-05-2011 |
| | | | DE | 112008003766 T5 | 12-05-2011 |
| | | | GB | 2470333 A | 17-11-2010 |
| | | | TW | 200943168 A | 16-10-2009 |
| | | | US | 2011023064 A1 | 27-01-2011 |
| | | | WO | 2009110897 A1 | 11-09-2009 |

EPO FORM P0459

For more details about this annex : see Official Journal of the European Patent Office, No. 12/82

**EP 3 059 972 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140366057 A